# EUROPÄISCHE PATENTSCHRIFT

(11) **EP 3 233 421 B1**
(45) Veröffentlichungstag und Bekanntmachung des Hinweises auf die Patenterteilung: **06.05.2020**
(21) Anmeldenummer: 15808215.6
(22) Anmeldetag: 11.12.2015
(51) Int. Cl.: B29C 55/06, B29C 53/56

(54) **VERFAHREN FÜR DIE ANPASSUNG ZUMINDEST EINES WICKELPARAMETERS EINER WICKELVORRICHTUNG**
METHOD FOR ADAPTING AT LEAST ONE WINDING PARAMETER OF A WINDING DEVICE
PROCÉDÉ D'ADAPTATION D'AU MOINS UN PARAMÈTRE D'ENROULEMENT D'UN DISPOSITIF D'ENROULEMENT

(30) Priorität: 19.12.2014 DE 102014119204
(43) Veröffentlichungstag der Anmeldung: 25.10.2017
(73) Patentinhaber: Windmöller & Hölscher KG, 49525 Lengerich (DE)
(72) Erfinder: KIRCHHOFF, Tim, 48157 Münster (DE); HOFFMANN, Frank, 48268 Greven (DE); BACKMANN, Martin, 49525 Lengerich (DE)
(86) Internationale Anmeldenummer: PCT/EP2015/079392
(87) Internationale Veröffentlichungsnummer: WO 2016/096645

(56) Entgegenhaltungen:
- GB-A- 890 005
- US-A1- 2009 195 877

## Beschreibung

Die vorliegende Erfindung betrifft ein Verfahren für die Anpassung zumindest eines Wickelparameters einer Wickelvorrichtung beim Aufwickeln einer Folienbahn auf einer Wickelhülse sowie eine Optimiervorrichtung für die Ausführung einer derartigen Anpassung.

Es ist bekannt, dass in Folienmaschinen Endlosfolienbahnen erzeugt werden. Diese Folienbahnen werden anschließend auf Wickelhülsen aufgewickelt, um für Lagerung und Transport handlebar zu sein. Diese Wickelhülsen sind häufig aus Kunststoff, Stahl oder Karton ausgebildet. Um auf der Wickelhülse die Folienbahn aufzuwickeln, sind verschiedene Qualitätsparameter zu beachten. Insbesondere ist sicherzustellen, dass kein zu straffes und auch kein zu lockeres Aufwickeln auf der Wickelhülse erfolgt. Ein zu starkes Aufwickeln würde möglicherweise zu einem Kollabieren der Wickelhülse oder zu einer Beschädigung der Folienbahn durch plastische Verformung derselben führen. Ein zu lockeres Aufwickeln könnte zu mangelnder Stabilität des Folienwickels, zum Beispiel zu einem Teleskopieren des Folienwickels, führen. Um dies sicherzustellen, ist in bekannter Weise eine Anpassung von Wickelparametern durchzuführen, welche die einzelnen Steuerparameter der Wickelvorrichtung an die Art der Folie anpasst. Dabei wird die Art der Folie im Labor überprüft bzw. bestimmt und auf Basis der dort ermittelten Informationen die Wickelparameter eingestellt. Darüber hinaus sind auch Erfahrungswerte beim Bedienpersonal der Maschine vorhanden, welche den Einstellungen der Wickelparameter zugrunde gelegt werden können. Diese beiden Lösungen sind jedoch zum einen zeitaufwendig, zum anderen beruhen sie auf großer Erfahrung des Personals. Darüber hinaus sind trotz guter Erfahrung des Bedienpersonals und detaillierter Messungen im Labor noch Fehler möglich, da keine Information über die tatsächlichen Bedingungen und deren Auswirkungen auf die Folienbahn in der Wickelsituation in der Wickelvorrichtung vorhanden sind.

Die Schrift US 2009/195877 A1 offenbart ein gattungsgemäßes Verfahren zur Herstellung einer Folie.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Optimierung der Wickelparameter bei dem Aufwickeln einer Folienbahn auf einer Wickelhülse zu verbessern.

Die voranstehende Aufgabe wird gelöst durch ein Verfahren für die Anpassung zumindest eines Wickelparameters einer Wickelvorrichtung gemäß Anspruch 1 sowie eine Optimiervorrichtung mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Optimiervorrichtung und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Anpassung zumindest eines Wickelparameters einer Wickelvorrichtung beim Aufwickeln einer Folienbahn auf einer Wickelhülse. Hierfür weist ein erfindungsgemäßes Verfahren die folgenden Schritte auf:
- Fördern der Folienbahn entlang einer Messstrecke zwischen einer ersten angetriebenen Walze und einer zweiten angetriebenen Walze,
- Erhöhen des Bahnzugs der Folienbahn zwischen der ersten Walze und der zweiten Walze,
- kontinuierliches Erfassen der Antriebsparameter der ersten Walze und der zweiten Walze zumindest in Form des Drehmoments und der Umfangsgeschwindigkeit,
- Ermitteln eines Spannungs-Dehnungs-Diagramms aus den erfassten Antriebsparametern,
- Anpassen zumindest eines Wickelparameters der Wickelvorrichtung auf Basis des ermittelten Spannungs-Dehnungs-Diagramms zum Erzielen einer definierten Dehnung der Folienbahn beim Aufwickeln auf der Folienhülse.

Ein erfindungsgemäßes Verfahren führt nun dazu, dass ein Rückschluss auf Materialparameter der Folienbahn innerhalb der Wickelvorrichtung und während des Aufwickelns bzw. innerhalb der Wickelvorrichtung selbst oder der Folienmaschine durchgeführt wird. Entgegen der bisherigen Lösung einer Ermittlung in einem separaten Labor oder der Einstellung auf Basis von Erfahrungswerten wird erfindungsgemäß während dem Aufwickeln oder vor dem Aufwickeln eine entsprechende erfindungsgemäße Bestimmung durchgeführt. Dafür ist nun eine Messstrecke vorgegeben, welche durch zwei angetriebene Walzen definiert wird. Jede dieser angetriebenen Walzen steht in Antriebskontakt mit der Folienbahn. Selbstverständlich kann jede der beiden Walzen durch eine Sekundärwalze ergänzt werden, so dass eine erste Walze mit einer ersten Sekundärwalze von beiden Seiten eine Förderung der Folienbahn zur Verfügung stellt. Gleiches gilt auch für die Möglichkeit einer zweiten Walze mit einer zweiten Sekundärwalze.

Weiter ist es möglich, dass Folienkennwerte, insbesondere das Spannungs-Dehnungs-Diagramm, dem Produkt direkt oder indirekt mitgegeben wird für eine nachfolgende Weiterverarbeitung. Dies kann zum Beispiel mittels eines QR Codes auf dem Produkt oder als Parameterdaten in einem Auftragsmanagement erfolgen.

Ein Bahnzug der Folienbahn ist im Sinne der vorliegenden Erfindung die Kraft, insbesondere entlang oder im Wesentlichen entlang der Förderrichtung der Folienbahn. Wird also die Folienbahn entlang der Messstrecke von der ersten Walze zur zweiten Walze gefördert, so wird bei beiden Walzen eine Antriebskraft auf die Folienbahn übertragen. Diese Kraftübertragung erfolgt durch Reibkontakt zwischen der Folienbahn und der Oberfläche der jeweiligen Walze. Je nach Antriebsgeschwindigkeit stellt sich dabei in Abhängigkeit der geometrischen Ausbildung der jeweiligen Walze eine Umfangsgeschwindigkeit dieser Walze ein. Die Umfangsgeschwindigkeit entspricht der Fördergeschwindigkeit der Folienbahn in dieser Position. Üblicherweise wird im Durchlauf einer Folienmaschine oder einer Wickelvorrichtung ein definierter Bahnzug zur Verfügung gestellt, um die Folienbahn mit höchster Sicherheit immer auf Spannung zu halten. Das bedeutet, dass die Umfangsgeschwindigkeit von Walze zu Walze zunimmt, um diese Spannung aufrechtzuerhalten. Zwischen der ersten Walze und der zweiten Walze wird also nun erfindungsgemäß dieser Bahnzug erhöht. Dieses Erhöhen kann insbesondere ein Verändern der Relation der Umfangsgeschwindigkeit der ersten Walze zur Umfangsgeschwindigkeit der zweiten Walze beinhalten. Damit wird die Kraft, welche entlang der Messstrecke in der Folienbahn eingebracht wird, verändert bzw. durch die Erhöhung des Bahnzugs erhöht. Mit anderen Worten wirkt eine größere Zugkraft auf die Folienbahn durch diesen Verfahrensschritt ein.

Die durch den erhöhten Bahnzug eingebrachte erhöhte Kraft in der Folienbahn führt zu einer Veränderung der elastischen bzw. plastischen Dehnung der Folienbahn entlang der Messstrecke. Damit wird eine Rückkopplung auf die notwendigen Drehmomente möglich, welche notwendig sind, um die jeweils eingestellte Umfangsgeschwindigkeit zu erzielen. Wird beispielsweise eine hohe Kraft notwendig, um den gewünschten hohen Bahnzug einzustellen, so ist bei der dafür notwendigen hohen Umfangsgeschwindigkeit ein entsprechend hohes Drehmoment notwendig. Handelt es sich bei der Folienbahn um weiches und damit leicht streckbares Material, so wird bei gleicher Umfangsgeschwindigkeit nur ein geringeres Drehmoment notwendig sein, um diesen erhöhten Bahnzug einzustellen und aufrechtzuerhalten.

Wie aus der voranstehenden Erläuterung erkenntlich wird, hängt das notwendige Drehmoment für das Erzielen der eingestellten Umfangsgeschwindigkeit ab von den mechanischen Eigenschaften der Folienbahn. Somit lässt sich insbesondere durch das kontinuierliche oder schrittweise Erhöhen des Bahnzugs und des damit zusammenhängenden kontinuierlichen Erfassens der Antriebsparameter ein Spannungs-Dehnungs-Diagramm aus diesen erfassten Antriebsparametern ermitteln, welches spezifisch für die Folienbahn innerhalb der Folienmaschine ist. Mit diesem Spannungs-Dehnungs-Diagramm, welches als Folienparameter der Folienbahn verstanden werden kann, ist es nun möglich, den finalen erfinderischen Schritt zur Verfügung zu stellen, nämlich die Anpassung zumindest eines Wickelparameters. Diese Anpassung erfolgt zielgerichtet dahingehend, dass eine definierte Dehnung der Folienbahn beim Aufwickeln auf der Wickelhülse erzielt wird. Somit wird insbesondere für die Aufwickelschritte der Bahnzug als Wickelparameter eingestellt, welcher zum Beispiel durch Veränderung der Wickelparameter der Rotationsgeschwindigkeit einer Wickelhülse oder entsprechender Kontaktwalzen veränderbar ist.

Somit ist darüber hinaus eine Inline-Messung möglich, welche es erlaubt in unterschiedlichen Folienqualitäten bei unterschiedlichen Folienbelastbarkeiten die gleiche oder im Wesentlichen die gleiche Wickelqualität zu erzielen. Wird beim Spannungs-Dehnungs-Diagramm die Folienbahn als relativ weiches Material definiert, so wird für die gewünschte Dehnung, welche insbesondere noch im elastischen Bereich liegt, ein anderer Wickelparameter notwendig sein, als wenn es sich bei der Folienbahn um relativ stabiles und widerstandsfähiges Material handelt.

Selbstverständlich können neben dem Drehmoment und der Umfangsgeschwindigkeit auch noch weitere Antriebsparameter der Walzen erfasst werden, um ein noch zielgenaueres Anpassen der Wickelparameter zu ermöglichen. Auch sind separate Parameter, wie der später noch erläuterte Wickeldruck, im Sinne der vorliegenden Erfindung erfassbar.

Ein erfindungsgemäßes Verfahren bringt also die Möglichkeit mit sich, innerhalb der Einsatzsituation und damit mit möglichst geringer Fehlerbehaftung, und vor allem ohne Zeitverzug die Messung und die Anpassung der Wickelparameter durchzuführen. Reale Umgebungsparameter und sonstige Einflüsse in dieser Einsatzsituation auf die Folienbahn werden dementsprechend automatisch bei den Erfassungsschritten berücksichtigt.

Es kann von Vorteil sein, wenn bei einem erfindungsgemäßen Verfahren der Bahnzug entlang der Messstrecke durch ein Beschleunigen der zweiten Walze und/oder ein Abbremsen der ersten Walze erzeugt wird. Dabei kann es sich sowohl um ein Beschleunigen als auch um ein Abbremsen als auch um eine Kombination aus Beschleunigen und Abbremsen handeln. Entscheidend ist, dass für das Erhöhen des Bahnzugs entlang der Messstrecke der Unterschied in der Umfangsgeschwindigkeit zwischen den beiden Walzen variiert wird. Dabei ist darauf hinzuweisen, dass die beiden Walzen sich selbstverständlich hinsichtlich ihres Durchmessers unterscheiden können. So ist hier nicht nur alleine die Rotationsgeschwindigkeit, also die Umdrehungszahl der jeweiligen Walze, entscheidend, sondern vielmehr die Korrelation zum Durchmesser und die sich auf Basis der eingestellten Umdrehungszahl einstellende Umfangsgeschwindigkeit. Ein Abbremsen der ersten Walze in Kombination mit einem Beschleunigen der zweiten Walze führt dazu, die Unterschiede in der Umfangsgeschwindigkeit zu maximieren, was insbesondere bei hohen Elastizitätsmöglichkeiten einer Folienbahn von Vorteil ist, um ein möglichst komplettes Spannungs-Dehnungs-Diagramm zur Verfügung zu stellen. Dabei wird erfindungsgemäß sichergestellt, dass rechtzeitig der Bahnzug hinsichtlich seiner Erhöhung gestoppt wird, um einen Abriss der Folienbahn zu vermeiden. Während bei Labormessungen üblicherweise ein Messstück einer Folienbahn bis zum Riss vermessen wird, erfolgt ein erfindungsgemäßes Verfahren innerhalb der Vorrichtung nur bis zu einem bestimmten Grad. So kann beispielsweise vorgegeben werden, dass der Bahnzug solange erhöht wird, bis die Grenze zwischen elastischem und plastischem Verhalten erkannt wird. Auch ist es möglich, diese voranstehend genannte Grenze um 10% zu überschreiten, um definiert den Übergangspunkt zwischen elastischem und plastischem Verhalten erkennen zu können.

Vorteilhaft ist es ebenfalls, wenn bei einem erfindungsgemäßen Verfahren es sich bei der ersten Walze und/oder der zweiten Walze um wenigstens eine der folgenden Antriebswalzen der Wickelvorrichtung oder einer Folienmaschine handelt:
- Schneidvorzugswalze
- Kontaktwalze
- Zentralantriebswalze
- Reckwalze
- Auflagewalze

Bei der voranstehenden Aufzählung handelt es sich um eine nicht abschließende Liste. Entscheidend für die erfindungsgemäße Korrelation ist es, dass die zweite Walze der ersten Walze nachgeordnet ist. Dabei kann es bevorzugt sein, wenn innerhalb der Messstrecke, also die gesamte Bewegungsstrecke zwischen der ersten Walze und der zweiten Walze, die Folienbahn keinen Kontakt zu einer weiteren Walze und/oder einer anderen Führungsfläche oder Führungseinrichtung hat. Jedoch ist es grundsätzlich auch denkbar, dass die Messstrecke ein oder mehrere Umlenkwalzen, insbesondere passive bzw. nicht angetriebene Walzen aufweist, um die Messstrecke in möglichst kompakter Weise länger ausgestalten zu können.

Ein weiterer Vorteil kann es sein, wenn bei einem erfindungsgemäßen Verfahren als Wickelparameter zumindest einer der folgenden angepasst wird:
- Bahnzug der Wickelhülse
- Walzenvoreilung der Wickelvorrichtung
- Anpresskräfte der Folienbahn auf der Wickelhülse

Bei der voranstehenden Aufzählung handelt es sich um eine nicht abschließende Liste. Der Bahnzug der Wickelhülse ist dabei insbesondere korreliert mit der Wickelhärte, also der Kraft, mit welcher die einzelnen Lagen der Folienbahn in einem Folienwickel auf der Wickelhülse aufgewickelt werden. Die Walzenvoreilung der Wickelvorrichtung ist ein Maß dafür, welches diesen Bahnzug beeinflussen bzw. einstellen kann. Anpresskräfte der Folienbahn auf der Wickelhülse stehen ebenfalls in direkter Korrelation zu dem Bahnzug und können zusätzlich, zum Beispiel durch eine entsprechende Kontaktwalze, definiert zur Verfügung gestellt werden. Auch hier bleibt das Ziel die Einstellung einer definierten Dehnung, insbesondere im elastischen Bereich nahe der Plastizitätsgrenze der Folienbahn.

Ein weiterer Vorteil ist erzielbar, wenn bei einem erfindungsgemäßen Verfahren die Folienbahn die erste Walze und/oder die zweite Walze zumindest während der Durchführung des Verfahrens um mehr als ca. 90°, insbesondere im Bereich zwischen ca. 100° und 180° umschlingt. Dabei handelt es sich um den sogenannten Umschlingungswinkel der jeweiligen Walze. Je größer die Umschlingung ausgebildet ist, umso höher ist die Traktion zwischen der Oberfläche der Walze und der geförderten Folienbahn. Eine erhöhte Traktion und die damit eingestellte erhöhte Haftreibung zwischen der Folienbahn und der jeweiligen Walze führt zu einem verminderten Risiko eines Durchrutschens beim Antrieb. Insbesondere bei hohen Bahnzügen innerhalb der Folienbahn entstehen große Kräfte durch die entsprechenden inneren Materialkräfte der Folienbahn, welche sich auf den Oberflächen der beiden Walzen abtragen. Damit wird es möglich, auch hohe Bahnzüge zur Verfügung zu stellen, ohne dass ein Durchrutschen den Bahnzug in unerwünschter Weise limitieren könnte. Dabei ist es auch vorteilhaft, wenn die beiden Walzen eine entsprechende reibungsverbesserte, reibungsvergrößerte oder in ähnlicher Weise angepasste Oberfläche aufweisen, um die Traktionen noch weiter zu verbessern.

Ein weiterer Vorteil kann es sein, wenn bei einem erfindungsgemäßen Verfahren das Aufwickeln der Folienbahn zumindest während der Erfassung der Antriebsparameter auf einer Prüf-Wickelhülse erfolgt, welche eine Sensorvorrichtung zur Erfassung des auf der Prüf-Wickelhülse lastenden Wickeldrucks aufweist. Dabei wird bei der Anpassung des zumindest einen Wickelparameters zusätzlich eine Obergrenze des Wickeldrucks berücksichtigt. Die Prüf-Wickelhülse kann dabei Teil der normalen Wickelhülse sein. Auch kann eine separate Prüf-Wickelhülse mit einer solchen Sensorvorrichtung eingesetzt werden. Bei dem Wickeldruck handelt es sich insbesondere um eine Druckkraft, welche radial oder im Wesentlichen radial auf die Drehachse dieser Prüf-Wickelhülse zugerichtet ist. Dieser Wickeldruck entsteht durch die Spannung beim Aufwickeln der Folienbahn und ist umso größer, umso größer der Bahnzug in der Folienbahn bei diesem Aufwickelvorgang ist. Je höher dieser Wickeldruck sich einstellt, umso stärker muss die entsprechende Wickelhülse ausgebildet sein. So kann dieser Wickeldruck verwendet werden, um den Wickelparameter in Form der Auswahl einer entsprechend stabileren Wickelhülse für den Aufwickelvorgang vorzugeben. Auch kann bei leichten, insbesondere aus Kartonmaterial ausgebildeten Wickelhülsen eine Obergrenze definiert werden, welche zusätzlich Berücksichtigung bei der Anpassung der Wickelparameter findet. Insbesondere ist diese Obergrenze mit einem Sicherheitsabstand zur maximalen Belastbarkeit hinsichtlich des Wickeldrucks der tatsächlich eingesetzten Wickelhülse ausgebildet.

Ein weiterer Vorteil ist es, wenn bei einem erfindungsgemäßen Verfahren der Wickeldruck für einen Abgleich mit einem Wickelmodell eingesetzt wird, um dieses Wickelmodel für die Anpassung des zumindest einen Wickelparameters einzusetzen, zu verifizieren und/oder zu optimieren. Ein Wickelmodell bezieht dabei die Folienbahn hinsichtlich ihrer mechanischen Eigenschaften mit ein. Insbesondere die Korrelation zwischen Wickelparametern und dem ermittelten Spannungs-Dehnungs-Diagramm ist eine Grundlage, welche in dem Wickelmodell vorhanden ist. Unterschiedliche Wickelmodelle können dementsprechend zu unterschiedlichen Ergebnissen der Anpassungen der Wickelparameter führen. So kann durch den ermittelten Wickeldruck ein explizites Wickelmodell für den Einsatz ausgewählt werden, bzw. das ausgewählte Wickelmodell hinsichtlich seiner Richtigkeit verifiziert werden. Auch können bestehende Wickelmodelle als Rückkopplung durch den Wickeldruck verändert bzw. optimiert werden.

Vorteilhaft ist es weiter, wenn bei einem erfindungsgemäßen Verfahren die Übertragung des erfassten Wickeldrucks an eine Kontrolleinheit drahtlos, insbesondere mittels eines der folgenden Standards übermittelt wird:
- WLAN (Wireless Local Area Network)
- Bluetooth
- NFC (Near Field Communication)

Bei der voranstehenden Aufzählung handelt es sich um eine nicht abschließende Liste. Eine drahtlose Kommunikation reduziert den Aufwand bei der Kommunikation, insbesondere der Konstruktion, da ein Verkabelungsaufwand reduziert oder eliminiert wird. Auch kann auf diese Weise kostengünstig und einfach die Sensorvorrichtung als mitrotierender Teil der Wickelhülse ausgebildet sein.
Ein weiterer Vorteil ist es, wenn bei einem erfindungsgemäßen Verfahren vor dem Erreichen der ersten Walze von der Folienbahn ein Messstreifen, insbesondere kontinuierlich abgetrennt wird, und der Messstreifen die Messstrecke durchläuft. So wird nicht die komplette Folienbahn, sondern nur ein Teil der Folienbahn hinsichtlich des erfindungsgemäßen Verfahrens überprüft. Beispielsweise ist es möglich, dass an einer Folienmaschine die Folienbahn beschnitten wird. Ein solcher Beschnitt erfolgt insbesondere an den Rändern oder in der Mitte, um entsprechend reduzierte Breiten der Folienbahn für die nachfolgende Wickelvorrichtung oder die nachfolgenden Wickelvorrichtungen zu erzielen. Diese sogenannten Schlechtbahnen, welche abgeschnitten werden, und welche auch als Trim bezeichnet werden können, werden abgeführt und entweder entsorgt oder einem Recyclingprozess zugeführt. In einem soclhen Fall ist der Messstreifen also ein Abfallprodukt für den Einsatz in einem erfindungsgemäßen Verfahren. Dabei wird bevorzugt ein mittiger Messstreifen verwendet, um der realen Qualität des Produkts möglichst nahe zu kommen. So kann nun in dem weiteren Verlauf dieser Messstreifen eine Messstrecke zur Verfügung gestellt werden, welche ausschließlich an diesen Messstreifen das erfindungsgemäße Verfahren durchführt. Somit wird es möglich, inline das erfindungsgemäße Verfahren kontinuierlich durchzuführen bzw. kontinuierlich und/oder regelmäßig zu wiederholen, wodurch die erfindungsgemäßen Vorteile für eine regelmäßige Kontrolle der eingesetzten Wickelparameter zur Verfügung stellbar ist.

Vorteilhaft ist es weiter, wenn bei einem erfindungsgemäßen Verfahren die Verfahrensschritte regelmäßig und/oder kontinuierlich wiederholt werden. Dies führt insbesondere in Kombination mit dem voranstehenden Absatz dazu, dass kontinuierlich über die gesamte Betriebszeit eine hohe Sicherheit und eine hohe Wickelqualität gewährleistet werden kann. Dabei können zum Beispiel in definierten Zeitabschnitten die erfindungsgemäßen Erfassungsschritte durchgeführt werden. Auch ist eine kontinuierliche oder quasi kontinuierliche Messung im Sinne der vorliegenden Erfindung denkbar. Auch ist es denkbar, dass die bestimmten Folienparameter gespeichert und analysiert werden. Dies kann zum Beispiel durch Vergleich mit Vorgabewerten erfolgen. Auch kann eine Ausgabe eines Warnsignals auf Basis eines derartigen Vergleichs erfolgen.
Ebenfalls Gegenstand der vorliegenden Erfindung ist eine Optimiervorrichtung für die Anpassung zumindest eines Wickelparameters einer Wickelvorrichtung beim Aufwickeln einer Folienbahn auf einer Wickelhülse. Eine solche Optimiervorrichtung weist eine erste Walze und eine zweite Walze zur Förderung der Folienbahn entlang einer Messstrecke zwischen diesen beiden Walzen auf. Weiter ist eine Kontrolleinheit für die Durchführung der folgenden Schritte vorgesehen:
- Erhöhen des Bahnzugs der Folienbahn zwischen der ersten Walze und der zweiten Walze,
- kontinuierliches Erfassen der Antriebsparameter der ersten Walze und der zweiten Walze zumindest in Form des Drehmoments und der Umfangsgeschwindigkeit,
- Ermitteln eines Spannungs-Dehnungs-Diagramms aus den erfassten Antriebsparametern,
- Anpassen zumindest eines Wickelparameters der Wickelvorrichtung auf Basis des ermittelten Spannungs-Dehnungs-Diagramms zum Erzielen einer definierten Dehnung der Folienbahn beim Aufwickeln der Wickelhülse.

Dabei sind insbesondere Antriebsvorrichtungen für die einzelnen Walzen, eine Erfassungsvorrichtung für das Erfassen der Antriebsparameter sowie die Kontrolleinheit für das Ermitteln der Spannungs-Dehnungs-Diagramme und das Anpassen der Wickelparameter vorgesehen.

Eine erfindungsgemäße Optimiervorrichtung ist vorzugsweise dahingehend ausgebildet, dass die Kontrolleinheit zur Durchführung eines erfindungsgemäßen Verfahrens ausgebildet ist. Damit bringt die erfindungsgemäße Optimiervorrichtung die gleichen Vorteile mit sich, wie sie ausführlich mit Bezug auf ein erfindungsgemäßes Verfahren erläutert worden sind.

Es kann von Vorteil sein, wenn bei einer erfindungsgemäßen Optimiervorrichtung der Umschlingungswinkel der ersten Walze und/oder der Umschlingungswinkel der zweiten Walze größer ca. 90°, insbesondere im Bereich zwischen ca. 100° und 180°, ausgebildet ist. Damit werden die gleichen Vorteile hinsichtlich verbesserter Traktion erzielt, wie sie mit Bezug zum entsprechenden Verfahrensschritt erläutert worden sind.

Auch ist es von Vorteil, wenn bei einer erfindungsgemäßen Optimiervorrichtung der Umschlingungswinkel der ersten Walze dem Umschlingungswinkel der zweiten Walze entspricht oder im Wesentlichen entspricht. Dies ist insbesondere mit Größenverhältnissen gemäß dem voranstehenden Absatz kombiniert. Wird der Umschlingungswinkel für beide Walzen im Wesentlichen gleich oder exakt gleich ausgewählt, so entsteht für beide Walzen, insbesondere bei gleichem Durchmesser, eine gleiche oder im Wesentlichen gleiche Reibungssituation. Auch auf diese Weise wird durch den entsprechenden Kraftausgleich zwischen den beiden Walzen die Traktionssituation verbessert und ein Durchrutschen mit höherer Wahrscheinlichkeit vermieden.

Vorteilhaft ist es darüber hinaus, wenn bei einer Optimiervorrichtung gemäß der vorliegenden Erfindung eine Prüf-Wickelhülse für das Aufwickeln der Folienbahn vorgesehen ist, welche Prüf-Wickelhülse eine Sensorvorrichtung zur Erfassung des auf der Prüf-Wickelhülse lastenden Wickeldrucks aufweist. Auch hier sind die entsprechenden Vorteile bereits mit Bezug auf den zugehörigen Verfahrensschritt erläutert worden. Die Sensorvorrichtung ist dabei insbesondere für eine Funkübertragung ausgebildet. Auch kann hier der bereits beschriebene Abgleich mit einem Wickelmodell durchgeführt werden. In einer solchen Prüf-Wickelhülse kann beispielsweise ein Umfangsspalt zumindest teilweise entlang der Längserstreckung ausgebildet sein, in welchem die Sensorvorrichtung aufgenommen ist. Auch ist ein Drucksensor auf der Oberfläche der Prüf-Wickelhülse im Sinne der vorliegenden Erfindung denkbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Darstellung eines erfindungsgemäßen Verfahrens mit einer entsprechenden Optimiervorrichtung,
- Fig. 2: eine weitere Möglichkeit eines erfindungsgemäßen Verfahrens mit einer Optimiervorrichtung,
- Fig. 3: eine Möglichkeit der Erhöhung des Bahnzugs,
- Fig. 4: eine weitere Möglichkeit der Erhöhung des Bahnzugs,
- Fig. 5: eine weitere Möglichkeit der Erhöhung des Bahnzugs,
- Fig. 6: ein Beispiel eines Spannungs-Dehnungs-Diagramms,
- Fig. 7: eine Ausführungsform einer Prüf-Wickelhülse und
- Fig. 8: eine weitere Ausführungsform einer Prüf-Wickelhülse.

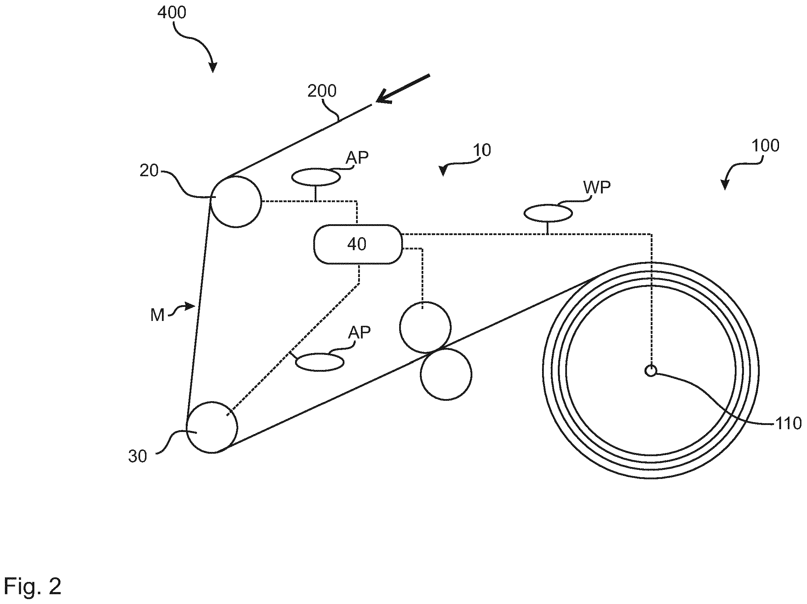

Die einfachste Ausführungsform einer erfindungsgemäßen Optimiervorrichtung 10 ist in der Fig. 2 dargestellt. Hier ist eine Wickelvorrichtung 100 mit einer Wickelhülse 110 zur Verfügung gestellt, auf welcher hier eine Folienbahn 200 aufgewickelt wird. Die Folienbahn 200 kommt dabei aus einer Folienmaschine 400 und wird in dieser um diverse Walzen umgelenkt. Hier ist explizit eine erste Walze 20 und eine zweite Walze 30 zu erkennen, zwischen welchen beiden sich eine Messstrecke M für die Folienbahn 200 ausbildet. Erfindungsgemäß kann nun diese Messstrecke M dazu verwendet werden, durch entsprechende Veränderung der Antriebssituation einen Bahnzug in der Folienbahn 200 in der Messstrecke M zu erhöhen, wie dies später noch erläutert wird.

Eine Kontrolleinheit 40 der Optimiervorrichtung 10 steht in signalkommunizierender Verbindung mit den beiden angetriebenen Walzen 20 und 30, und ermittelt dort kontinuierlich die zugehörigen Antriebsparameter AP in Form des Drehmoments und der Umfangsgeschwindigkeit und optional weiterer zusätzlicher Antriebsparameter AP. Weiter wird in einer Kontrollvorrichtung 40 das erfindungsgemäße Verfahren durchgeführt, also insbesondere das Spannungs-Dehnungs-Diagramm ermittelt und anschließend zum Erzielen einer definierten Dehnung zumindest ein Wickelparameter WP angepasst. Das Anpassen kann hier zum Beispiel in einer Veränderung der Drehzahl der Wickelvorrichtung 100 resultieren.

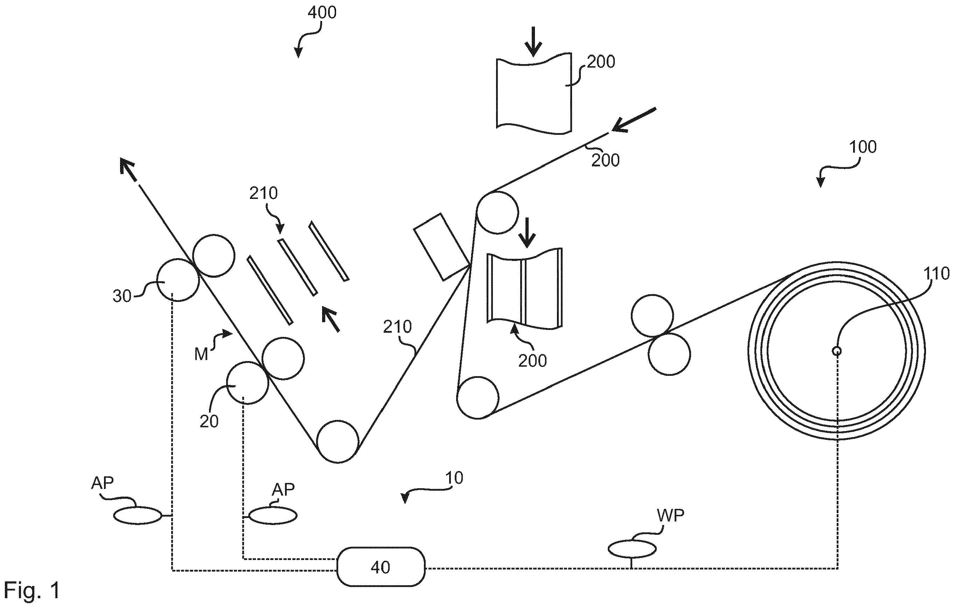

Fig. 1 zeigt eine Weiterbildung der Fig. 2. Hier ist die Folienbahn 200 mit einer Schneidvorrichtung kontaktiert, welche nach einer Walze einen Schnitt bzw. mehrere Schnitte durchführt. So ist von rechts oben entlang der Pfeilrichtung kommend eine komplette Folienbahn 200 dargestellt. Eine entsprechende Schneidvorrichtung schneidet Messstreifen 200, hier drei Stück, ab und trennt diese vom Rest der Folienbahn 200 ab. Während der Rest der Folienbahn 200 in der bereits zur Fig. 2 beschriebenen Walze aufgewickelt wird, erfolgt ein Weiterfördern der Messstreifen 210 nach links. Hier können ein oder mehrere dieser Messstreifen 210 nun ebenfalls eine Messstrecke M zwischen zwei Walzen 20 und 30 durchlaufen. Hier erfolgt ebenfalls eine Variation des Bahnzugs und die gleiche Erfassung der Antriebsparameter AP durch die Kontrolleinheit 40. Auch hier wird nun wieder ein Spannungs-Dehnungs-Diagramm ermittelt und entsprechend zumindest einer der Wickelparameter WP angepasst.

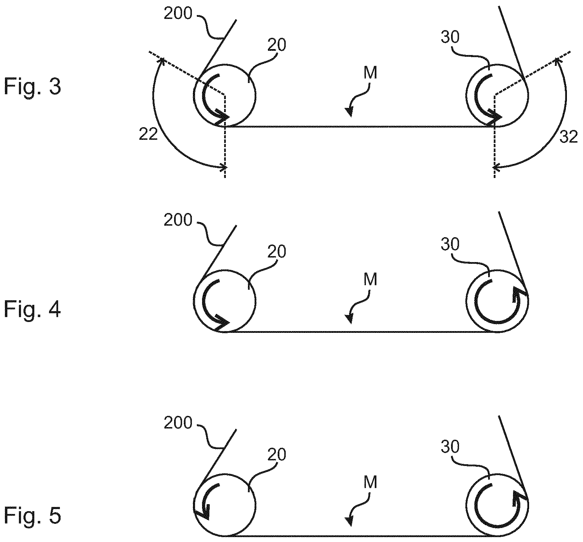

Die Fig. 3 bis 5 zeigen Möglichkeiten und Definitionen des Bahnzugs der Folienbahn 200. Hier sind die beiden Walzen 20 und 30 mit Umschlingungswinkeln 22 und 32 von >90° versehen. Die beiden Umschlingungswinkel 22 und 32 sind hier im Wesentlichen identisch ausgebildet. Dabei durchläuft die Folienbahn 200 die Messstrecke M, wobei in Fig. 3 kein oder nur ein sehr geringer Bahnzug besteht, da die Umfangsgeschwindigkeit der beiden Walzen 20 und 30 identisch oder im Wesentlichen identisch ist. Wie durch die Vergrößerung oder Verkleinerung der Rotationspfeile in den Fig. 4 und 5 angezeigt ist, erfolgt nun eine Veränderung der Umfangsgeschwindigkeiten. Gemäß Fig. 4 wird die Umfangsgeschwindigkeit der zweiten Walze 30 erhöht, wodurch der Bahnzug in der Folienbahn 200 entlang der Messstrecke M steigt. Anschließend oder alternativ dazu ist ein Abbremsen und damit ein Reduzieren der Umfangsgeschwindigkeit der ersten Walze 20 gemäß Fig. 5 erfolgt, was zu einem weiteren Erhöhen des Bahnzugs in der Folienbahn 200 führt.

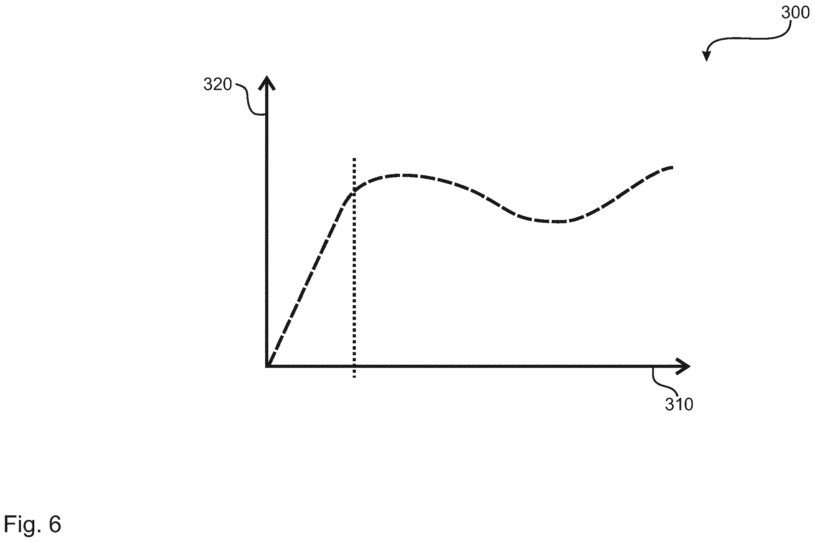

Durch kontinuierliches Überwachen der Antriebsparameter AP in Form des Drehmoments und der Umfangsgeschwindigkeit der beiden Walzen 20 und 30 kann die Kontrolleinheit 40 ein Spannungs-Dehnungs-Diagramm 300 gemäß der Fig. 6 ermitteln. Hier ist gut durch die gepunktete Linie in senkrechter Ausrichtung der Übergang zwischen einem elastischen Verhalten und einem plastischen Verhalten für das Messergebnis zu erkennen. Hier wird nun entlang der Dehnung 310 ein definierter Wert gesetzt, welcher einer entsprechenden Spannung 320 zugehörig ist, und diese definierte Dehnung soll erzielt werden. Hierfür wird von der Kontrolleinheit 40 zumindest ein Wickelparameter WP, zum Beispiel der Bahnzug bzw. die Umfangsgeschwindigkeit der Wickelhülse 110 angepasst.

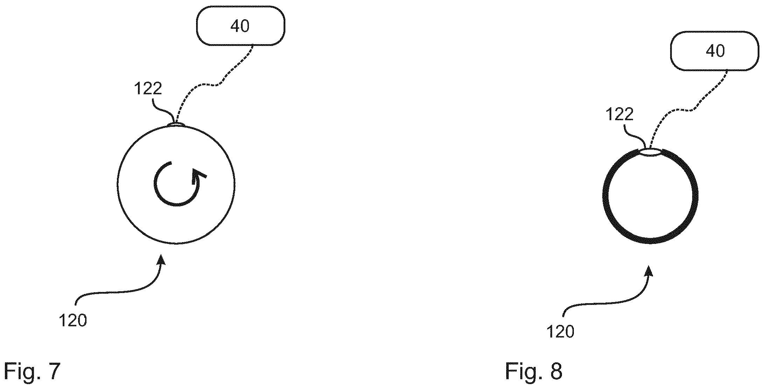

Die Fig. 7 und 8 zeigen unterschiedliche Lösungen von Prüf-Wickelhülsen 120, welche hier beide mit Sensorvorrichtungen 122 versehen sind. Gemäß der Ausführungsform der Fig. 7 handelt es sich bei der Sensorvorrichtung 122 um einen auf der Oberfläche der Prüf-Wickelhülse 102 angeordneten Drucksensor. Gemäß der Fig. 8 ist eine entsprechende Sensorvorrichtung 122 in einem Längsschlitz der hohl ausgebildeten Prüf-Wickelhülse 120 angeordnet. In beiden Fällen erfolgt die hier als gepunktete Linie dargestellte Kommunikation zur Kontrolleinheit 40 mittels drahtloser Übertragung, insbesondere mithilfe eines WLAN- oder Bluetooth-Moduls.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Optimiervorrichtung
- 20: erste Walze
- 22: Umschlingungswinkel
- 30: zweite Walze
- 32: Umschlingungswinkel
- 40: Kontrolleinheit

- 100: Wickelvorrichtung
- 110: Wickelhülse
- 120: Prüf-Wickelhülse
- 122: Sensorvorrichtung

- 200: Folienbahn
- 210: Messstreifen

- 300: Spannungs-Dehnungs-Diagramm
- 310: Dehnung
- 320: Spannung

- 400: Folienmaschine

- AP: Antriebsparameter
- WP: Wickelparameter
- M: Messstrecke

## Patentansprüche

1. Verfahren für die Anpassung zumindest eines Wickelparameters (WP) einer Wickelvorrichtung (100) beim Aufwickeln einer Folienbahn (200) auf einer Wickelhülse (110), aufweisend die folgenden Schritte:
- Fördern der Folienbahn (200) entlang einer Messstrecke (M) zwischen einer ersten angetriebenen Walze (20) und einer zweiten angetriebenen Walze (30),
- Erhöhen des Bahnzugs der Folienbahn (200) zwischen der ersten Walze (20) und der zweiten Walze (30),
- Kontinuierliches Erfassen der Antriebsparameter (AP) der ersten Walze (20) und der zweiten Walze (30) zumindest in Form des Drehmoments und der Umfangsgeschwindigkeit,
- Ermitteln eines Spannungs-Dehnungs-Diagramms (300) aus den erfassten Antriebsparametern (AP),
- Anpassen zumindest eines Wickelparameters (WP) der Wickelvorrichtung (100) auf Basis des ermittelten Spannungs-Dehnungs-Diagramms (300) zum Erzielen einer definierten Dehnung (310) der Folienbahn (200) beim Aufwickeln auf der Wickelhülse (110).

2. Verfahren nach Anspruch 1,
**dadurch gekennzeichnet, dass**
der Bahnzug entlang der Messtrecke (M) durch ein Beschleunigen der zweiten Walze (30) und/oder ein Abbremsen der ersten Walze (20) erzeugt wird.

3. Verfahren nach einem der vorangegangenen Ansprüche,
**dadurch gekennzeichnet, dass**
es sich bei der ersten Walze (20) und/oder der zweiten Walze (30) um wenigstens eine der folgenden Antriebswalzen der Wickelvorrichtung (100) oder einer Folienmaschine (400) handelt:
- Schneidvorzugswalze
- Kontaktwalze
- Zentralantriebswalze
- Reckwalze
- Auflagewalze

4. Verfahren nach einem der vorangegangenen Ansprüche,
**dadurch gekennzeichnet, dass**
als Wickelparameter (WP) zumindest einer der folgenden angepasst wird:
- Bahnzug zur Wickelhülse (110)
- Walzenvoreilung der Wickelvorrichtung (100)
- Anpresskräfte der Folienbahn (200) auf der Wickelhülse (110)

5. Verfahren nach einem der vorangegangenen Ansprüche,
**dadurch gekennzeichnet, dass**
die Folienbahn (200) die erste Walze (20) und/oder die zweite Walze (30) zumindest während der Durchführung des Verfahrens um mehr als ca. 90°, insbesondere in Bereich zwischen ca. 100° und 180°, umschlingt.

6. Verfahren nach einem der vorangegangenen Ansprüche,
**dadurch gekennzeichnet, dass**
das Aufwickeln der Folienbahn (200) zumindest während der Erfassung der Antriebsparameter (AP) auf einer Prüf-Wickelhülse (120) erfolgt, welche eine Sensorvorrichtung (122) zur Erfassung des auf der Prüf-Wickelhülse (120) lastenden Wickeldrucks aufweist, wobei die Anpassung des zumindest einen Wickelparameters (WP) zusätzlich eine Obergrenze des Wickeldrucks berücksichtigt.

7. Verfahren nach Anspruch 6,
**dadurch gekennzeichnet, dass**
der Wickeldruck für einen Abgleich mit einem Wickelmodell eingesetzt wird, um dieses Wickelmodell für die Anpassung des zumindest einen Wickelparameters (WP) einzusetzen, zu verifizieren und/oder zu optimieren.

8. Verfahren nach einem Ansprüche 6 oder 7,
**dadurch gekennzeichnet, dass**
die Übertragung des erfassten Wickeldrucks an eine Kontrolleinheit (40) drahtlos, insbesondere mittels eines der folgenden Standards übermittelt wird:
- W-LAN (Wireless Local Area Network)
- Bluetooth
- NFC (Near Field Communication)

9. Verfahren nach einem der vorangegangenen Ansprüche,
**dadurch gekennzeichnet, dass**
vor dem Erreichen der ersten Walze (20) von der Folienbahn (200) ein Messstreifen (210), insbesondere kontinuierlich, abgetrennt wird und der Messtreifen (210) die Messtrecke (M) durchläuft.

10. Verfahren nach einem der vorangegangenen Ansprüche,
**dadurch gekennzeichnet, dass**
die Verfahrensschritte regelmäßig und/oder kontinuierlich wiederholt werden.

11. Optimiervorrichtung (10) für die Anpassung zumindest eines Wickelparameters (WP) einer Wickelvorrichtung (100) beim Aufwickeln einer Folienbahn (200) auf einer Wickelhülse (110), aufweisend eine erste Walze (20) und eine zweite Walze (30) zur Förderung der Folienbahn (200) entlang einer Messstrecke (M) zwischen diesen beiden Walzen (20, 30), weiter aufweisend eine Kontrolleinheit (40) für die Durchführung der folgenden Schritte:
- Erhöhen des Bahnzugs der Folienbahn (200) zwischen der ersten Walze (20) und der zweiten Walze (30),
- Kontinuierliches Erfassen der Antriebsparameter (AP) der ersten Walze (20) und der zweiten Walze (30) zumindest in Form des Drehmoments und der Umfangsgeschwindigkeit,
- Ermitteln eines Spannungs-Dehnungs-Diagramms (300) aus den erfassten Antriebsparametern (AP),
- Anpassen zumindest eines Wickelparameters (WP) der Wickelvorrichtung (100) auf Basis des ermittelten Spannungs-Dehnungs-Diagramms (300) zum Erzielen einer definierten Dehnung (310) der Folienbahn (200) beim Aufwickeln auf der Wickelhülse (110).

12. Optimiervorrichtung (10) nach Anspruch 11,
**dadurch gekennzeichnet, dass**
die Kontrolleinheit (40) ausgebildet ist für eine Durchführung eines Verfahrens mit den Merkmalen eines der Ansprüche 1 bis 10.

13. Optimiervorrichtung (10) nach einem der Ansprüche 11 oder 12,
**dadurch gekennzeichnet, dass**
der Umschlingungswinkel (22) der ersten Walze (20) und/oder der Umschlingungswinkel (32) der zweiten Walze (30) größer ca. 90°, insbesondere in Bereich zwischen ca. 100° und 180°, ausgebildet ist.

14. Optimiervorrichtung (10) nach einem der Ansprüche 11 bis 13,
**dadurch gekennzeichnet, dass**
der Umschlingungswinkel (22) der ersten Walze (20) dem Umschlingungswinkel (32) der zweiten Walze (30) entspricht oder im Wesentlichen entspricht.

15. Optimiervorrichtung (10) nach einem der Ansprüche 11 bis 14
**dadurch gekennzeichnet, dass**
eine Prüf-Wickelhülse (120) vorgesehen ist für das Aufwickeln der Folienbahn (200), welche Prüf-Wickelhülse (120) eine Sensorvorrichtung (122) zur Erfassung des auf der Prüf-Wickelhülse (120) lastenden Wickeldrucks aufweist.

## Claims

1. A method for adapting at least one winding parameter (WP) of a winding device (100) during the winding of a film web (200) on a winding core (110), having the following steps:
- Conveying the film web (200) along a measuring path (M) between a first driven roll (20) and a second driven roll (30),
- increasing the web tension of the film web (200) between the first roll (20) and the second roll (30),
- continuous detecting of the drive parameters (AP) of the first roll (20) and of the second roll (30) at least in the form of the torque and the circumferential speed,
- determining a stress-strain diagram (300) from the detected drive parameters (AP),
- adapting at least one winding parameter (WP) of the winding device (100) on the basis of the determined stress-strain diagram (300) in order to achieve a defined elongation (310) of the film web (200) during the winding on the winding core (110).

2. The method according to Claim 1,
**characterized in that**
the web tension along the measuring path (M) is generated by an accelerating of the second roll (30) and/or a braking of the first roll (20).

3. The method according to any one of the preceding claims,
**characterized in that**
the first roll (20) and/or the second roll (30) is at least one of the following drive rolls of the winding device (100) or a film machine (400):
- Cutting draw roll
- contact roll
- central drive roll
- stretching roll
- support roll

4. The method according to any one of the preceding claims,
**characterized in that**
at least one of the following is adapted as a winding parameter (WP):
- web tension for the winding core (110)
- roll advance of the winding device (100)
- pressing forces of the film web (200) on the winding core (110)

5. The method according to any one of the preceding claims,
**characterized in that**
the film web (200) wraps around the first roll (20) and/or the second roll (30) at least during the implementation of the method by more than approx. 90°, in particular in the range between approx. 100° and 180°.

6. The method according to any one of the preceding claims,
**characterized in that**
the winding of the film web (200) takes place at least during the detection of the drive parameter (AP) on a test winding core (120), which has a sensor device (122) for the detection of the winding pressure acting on the test winding core (120), wherein the adaptation of the at least one winding parameter (WP) additionally takes into account an upper limit of the winding pressure.

7. The method according to Claim 6,
**characterized in that**
the winding pressure is used for a comparison with a winding model, in order to use, to verify and/or to optimize said winding model for the adaptation of the at least one winding parameter (WP).

8. The method according to any one of Claims 6 or 7,
**characterized in that**
the transmission of the detected winding pressure to a control unit (40) is transmitted wirelessly, in particular by means of one of the following standards:
- W-LAN (Wireless Local Area Network)
- Bluetooth
- NFC (Near Field Communication)

9. The method according to any one of the preceding claims,
**characterized in that**
before reaching the first roll (20) a measuring strip (210) is separated from the film web (200), in particular, continuously, and the measuring strip (210) passes through the measuring path (M).

10. The method according to any one of the preceding claims,
**characterized in that**
the method steps are repeated regularly and/or continuously.

11. An optimizing device (10) for the adaptation at least of one winding parameter (WP) of a winding device (100) when winding a film web (200) on a winding core (110), having a first roll (20) and a second roll (30) for conveying the film web (200) along a measuring strip (M) between said two rolls (20, 30), further having a control unit (40) for the implementation of the following steps:
- Increasing the web tension of the film web (200) between the first roll (20) and the second roll (30),
- continuous detecting of the drive parameters (AP) of the first roll (20) and of the second roll (30) at least in the form of the torque and the circumferential speed,
- determining a stress-strain diagram (300) from the detected drive parameters (AP),
- adapting at least one winding parameter (WP) of the winding device (100) on the basis of the determined stress-strain diagram (300) in order to achieve a defined elongation (310) of the film web (200) during the winding on the winding core (110).

12. The optimizing device (10) according to Claim 11,
**characterized in that**
the control unit (40) is designed for an implementation of a method with the features of any one of Claims 1 to 10.

13. The optimizing device (10) according to any one of Claims 11 or 12,
**characterized in that**
the wrap-around angle (22) of the first roll (20) and/or the wrap-around angle (32) of the second roll (30) is larger than approx. 90°, in particular, in the range between approx. 100° and 180°.

14. The optimizing device (10) according to any one of Claims 11 to 13,
**characterized in that**
the wrap-around angle (22) of the first roll (20) corresponds or substantially corresponds to the wrap-around angle (32) of the second roll (30).

15. The optimizing device (10) according to any one of Claims 11 to 14,
**characterized in that**
a test winding core (120) is provided for winding the film web (200), which test winding core (120) has a sensor device (122) for detecting the winding pressure acting on the test winding core (120).

## Revendications

1. Procédé d'adaptation d'au moins un paramètre d'enroulement (WP) d'un dispositif d'enroulement (100) lors de l'enroulement d'une bande de film (200) sur un mandrin d'enroulement (110), comportant les étapes suivantes consistant à :
- transporter la bande de film (200) le long d'un trajet de mesure (M) entre un premier rouleau (20) entraîné et un deuxième rouleau (30) entraîné,
- augmenter la tension de bande de la bande de film (200) entre le premier rouleau (20) et le deuxième rouleau (30),
- détecter en continu les paramètres d'entraînement (AP) du premier rouleau (20) et du deuxième rouleau (30) au moins sous la forme du couple et de la vitesse périphérique,
- déterminer un diagramme contrainte-déformation (300) à partir des paramètres d'entraînement (AP) détectés,
- adapter au moins un paramètre d'enroulement (WP) du dispositif d'enroulement (100) sur la base du diagramme contrainte-déformation (300) déterminé pour obtenir une déformation (310) définie de la bande de film (200) lors de l'enroulement sur le mandrin d'enroulement (110).

2. Procédé selon la revendication 1,
**caractérisé en ce que**
la traction de bande le long du trajet de mesure (M) est produite par une accélération du deuxième rouleau (30) et/ou un ralentissement du premier rouleau (20).

3. Procédé selon l'une des revendications précédentes,
**caractérisé en ce que,**
concernant le premier rouleau (20) et/ou le deuxième rouleau (30), il s'agit au moins de l'un des rouleaux d'entraînement suivants du dispositif d'enroulement (100) ou d'une extrudeuse de film (400) :
- rouleau de traction de coupe
- rouleau de contact
- rouleau d'entraînement central
- rouleau d'étirage
- rouleau d'appui.

4. Procédé selon l'une des revendications précédentes,
**caractérisé en ce que**
au moins l'un des paramètres suivants est adapté en tant que paramètre d'enroulement (WP) :
- traction de bande vers le mandrin d'enroulement (110)
- avance de rouleau du dispositif d'enroulement (100)
- forces de pression de la bande de film (200) sur le mandrin d'enroulement (110).

5. Procédé selon l'une des revendications précédentes,
**caractérisé en ce que**
au moins pendant la réalisation du procédé, la bande de film (200) enlace le premier rouleau (20) et/ou le deuxième rouleau (30) sur plus d'environ 90°, en particulier dans une plage d'environ 100° à 180°.

6. Procédé selon l'une des revendications précédentes,
**caractérisé en ce que,**
au moins pendant la détection des paramètres d'entraînement (AP), l'enroulement de la bande de film (200) s'effectue sur un mandrin d'enroulement de contrôle (120) qui comporte un dispositif de capteur (122) destiné à détecter la pression d'enroulement agissant sur le mandrin d'enroulement de contrôle (120), l'adaptation du paramètre d'enroulement (WP) au moins au nombre de un prenant en compte en plus une limite supérieure de la pression d'enroulement.

7. Procédé selon la revendication 6,
**caractérisé en ce que**
la pression d'enroulement est mise en œuvre pour une concordance avec un modèle d'enroulement pour mettre en œuvre, vérifier et/ou optimiser ce modèle d'enroulement pour l'adaptation du paramètre d'enroulement (WP) au moins au nombre de un.

8. Procédé selon l'une des revendications 6 ou 7,
**caractérisé en ce que**
la transmission de la pression d'enroulement détectée est effectuée sans fil vers une unité de contrôle (40), en particulier au moyen de l'un des standards suivants :
- W-LAN (Wireless Local Area Network)
- Bluetooth
- NFC (Near Field Communication).

9. Procédé selon l'une des revendications précédentes,
**caractérisé en ce que,**
avant d'atteindre le premier rouleau (20), un ruban de mesure (210) est découpé à partir de la bande de film (200), en particulier de façon continue, et le ruban de mesure (210) parcourt le trajet de mesure (M).

10. Procédé selon l'une des revendications précédentes,
**caractérisé en ce que**
les étapes du procédé sont répétées régulièrement et/ou de façon continue.

11. Dispositif d'optimisation (10) pour l'adaptation d'au moins un paramètre d'enroulement (WP) d'un dispositif d'enroulement (100) lors de l'enroulement d'une bande de film (200) sur un mandrin d'enroulement (110), comportant un premier rouleau (20) et un deuxième rouleau (30) pour le transport de la bande de film (200) le long d'un trajet de mesure (M) entre ces deux rouleaux (20, 30), comportant également une unité de contrôle (40) pour la réalisation des étapes suivantes :
- augmenter la tension de bande de la bande de film (200) entre le premier rouleau (20) et le deuxième rouleau (30),
- détecter en continu les paramètres d'entraînement (AP) du premier rouleau (20) et du deuxième rouleau (30) au moins sous la forme du couple et de la vitesse périphérique,
- déterminer un diagramme contrainte-déformation (300) à partir des paramètres d'entraînement (AP) détectés,
- adapter au moins un paramètre d'enroulement (WP) du dispositif d'enroulement (100) sur la base du diagramme contrainte-déformation (300) déterminé pour obtenir une déformation (310) définie de la bande de film (200) lors de l'enroulement sur le mandrin d'enroulement (110).

12. Dispositif d'optimisation (10) selon la revendication 11,
**caractérisé en ce que**
l'unité de contrôle (40) est constituée pour une réalisation d'un procédé présentant les caractéristiques de l'une des revendications 1 à 10.

13. Dispositif d'optimisation (10) selon l'une des revendications 11 ou 12,
**caractérisé en ce que**
l'angle d'enlacement (22) du premier rouleau (20) et/ou l'angle d'enlacement (32) du deuxième rouleau (30) est constitué en étant supérieur à environ 90°, en particulier en étant dans la plage d'environ 100° à 180°.

14. Dispositif d'optimisation (10) selon l'une des revendications 11 à 13,
**caractérisé en ce que**
l'angle d'enlacement (22) du premier rouleau (20) correspond ou correspond essentiellement à l'angle d'enlacement (32) du deuxième rouleau (30).

15. Dispositif d'optimisation (10) selon l'une des revendications 11 à 14,
**caractérisé en ce**
**qu'**il est prévu un mandrin d'enroulement de contrôle (120) pour l'enroulement de la bande de film (200), lequel mandrin d'enroulement de contrôle (120) comporte un dispositif de capteur (122) destiné à détecter la pression d'enroulement agissant sur le mandrin d'enroulement de contrôle (120).
